# EUROPEAN PATENT APPLICATION

(11) **EP 4 615 029 A1**
(43) Date of publication of application: **10.09.2025**
(21) Application number: 23885279.2
(22) Date of filing: 10.01.2023
(51) Int. Cl.: H04W 16/26

(54) **RELAY RADIO WAVE CONFIGURATION FOR CONTROLLING RELAY STATION VIA NETWORK**

(30) Priority: 04.11.2022 JP 2022177462
(71) Applicant: Rakuten Mobile, Inc., Tokyo 158-0094 (JP)
(72) Inventor: KITAGAWA Koichiro, Tokyo 158-0094 (JP); MUHAMMAD Awn, Tokyo 158-0094 (JP)
(74) Representative: Betten & Resch
(86) International application number: PCT/JP2023/000261
(87) International publication number: WO 2024/095503

(57) **Abstract**

A communication control apparatus includes processor that performs: by a relay station controller in a radio access network, controlling a relay station that relays communication between the radio access network and a communication device; by the relay station controller, providing the relay station with setting information concerning the relay radio wave to be transmitted by the relay station; and by a relay radio wave transmitter in the relay station, transmitting the relay radio wave based on the setting information. The relay radio wave setter provides the relay station with the setting information concerning at least one of the following for the relay radio wave to be transmitted by the relay station: coverage, allocation to a specific communication device, transmission power, beam type, beam width, number of beams, beam direction, frequency, frequency bandwidth, subcarrier spacing, symbol length, slot length, transmission time length, and transmission pattern.

## Description

### BACKGROUND OF THE INVENTION

### 1. Field of the Invention

The present disclosure relates to setting relay radio wave in control of relay station by network.

### 2. Description of the Related Art

The number, types, and applications of wireless communication devices (hereinafter also collectively referred to as communication devices or UEs (User Equipments) ), represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

In a mobile communication network, communication is performed between a radio access network (RAN), which includes various types of base stations, such as terrestrial base stations fixedly installed on the ground and non-terrestrial base stations such as communication satellites, and a UE. Relay stations are sometimes utilized to relay downlink communication and uplink communication between the RAN and the UE in order to expand each communication cell provided by each base station or to improve communication quality.

Patent Literature 1: JP-A-2010-278886

### SUMMARY OF THE INVENTION

In particular, a relay station (hereinafter also referred to as NCR (Network-Controlled Repeater or Network-Controlled Relay Station)) controllable by the RAN and/or the core network (hereinafter also collectively referred to as radio access network, RAN, network, and the like) can be utilized to improve the relay quality between the RAN and the UE.

The present disclosure was made in consideration of this situation, and its purpose is to provide a communication control apparatus and the like that can further improve the relay quality of a relay station controlled by a network.

In order to solve the above issue, a communication control apparatus in a certain aspect of the present disclosure includes at least one processor that performs: by a relay station controller in a radio access network, controlling a relay station that relays communication between the radio access network and a communication device; by a relay radio wave setter in the relay station controller, providing the relay station with setting information concerning the relay radio wave to be transmitted by the relay station; and by a relay radio wave transmitter in the relay station, transmitting the relay radio wave based on the setting information.

According to the aspect, the relay quality of the relay station can be further improved, with the setting information concerning the relay radio wave to be transmitted by the relay station being provided from the network.

Another aspect of the present disclosure is a communication control method. The method performs: by a radio access network, controlling a relay station that relays communication between the radio access network and a communication device; by the radio access network, providing the relay station with setting information concerning the relay radio wave to be transmitted by the relay station; and by the relay station, transmitting the relay radio wave based on the setting information.

Further another aspect of the present disclosure is a computer-readable medium. The medium stores a communication control program that causes a computer to perform: by a radio access network, controlling a relay station that relays communication between the radio access network and a communication device; by the radio access network, providing the relay station with setting information concerning the relay radio wave to be transmitted by the relay station; and by the relay station, transmitting the relay radio wave based on the setting information.

In addition, any combination of the above components, and any conversion of the expression of the present disclosure among methods, devices, systems, recording media, computer programs, and the like are also encompassed within this disclosure.

According to the present disclosure, the relay quality of a relay station controlled by a network can be further improved.

### BRIEF DESCRIPTION OF THE DRAWINGS

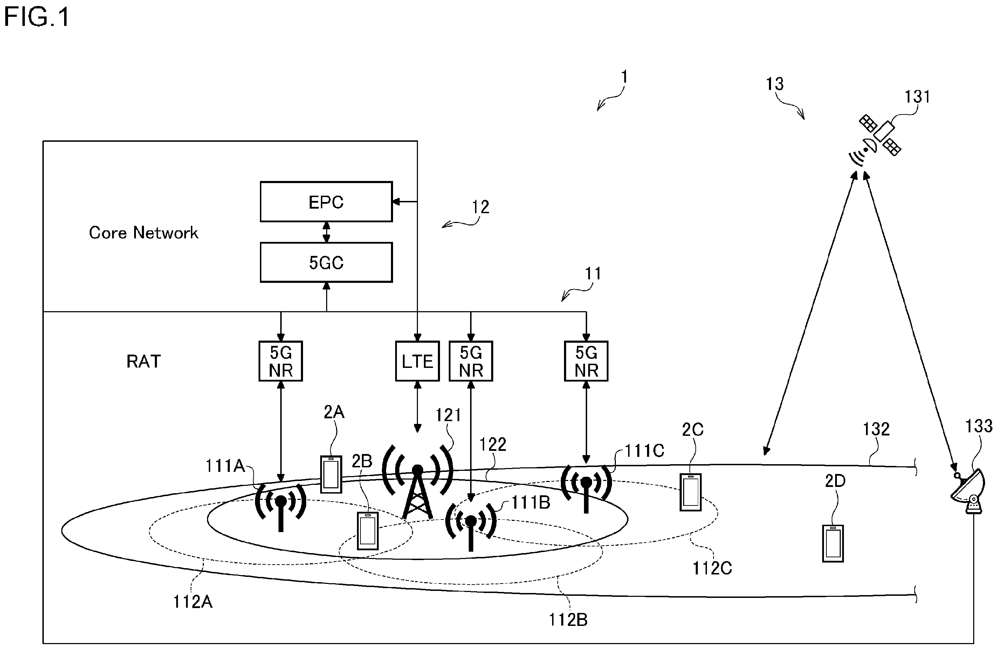

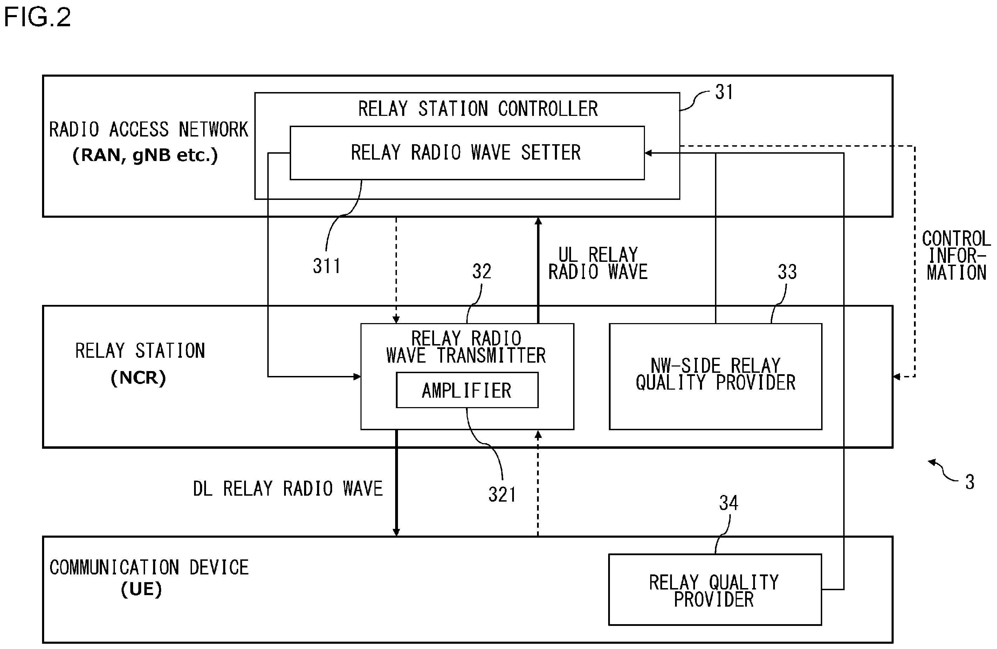

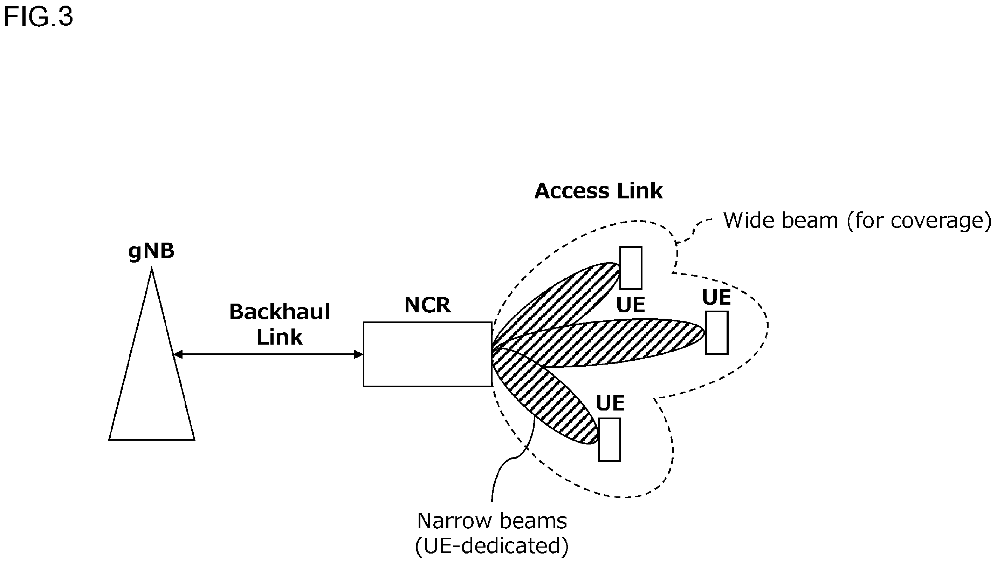

Figure 1 schematically shows the overview of a wireless communication system to which the communication control apparatus is applied. Figure 2 is a functional block diagram of the communication control apparatus. Figure 3 schematically shows an example of setting the coverage of the downlink relay radio wave in the access link.

### DETAILED DESCRIPTION OF THE INVENTION

Figure 1 schematically shows an overview of a wireless communication system 1 to which the communication control apparatus according to an embodiment of the present disclosure is applied. The wireless communication system 1 includes a 5G wireless communication system 11, a 4G wireless communication system 12, and a satellite communication system 13. The 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. The 4G wireless communication system 12 that complies with the fourth generation mobile communication system (4G) uses LTE (Long Term Evolution) or LTE-Advanced as the radio access technology and EPC (Evolved Packet Core) as the core network. The satellite communication system 13 is for satellite communication via communication satellite 131. Although not shown in the figure, the wireless communication system 1 may include wireless communication networks of a generation prior to 4G, a generation later than 5G (such as 6G), or any wireless communication networks that are not associated with generations, such as Wi-Fi (registered trademark).

The 5G wireless communication system 11 may include a plurality of 5G base stations 111A, 111B, and 111C (hereinafter also collectively referred to as 5G base station 111) installed on the ground capable of communicating by 5G NR with communication devices 2A, 2B, 2C, and 2D (hereinafter also collectively referred to as communication device(s) 2) such as smartphones, which are also referred to as UE (User Equipment). The 5G base station 111 is also referred to as gNodeB (gNB). The coverage or support range of each 5G base station 111A, 111B and 111C is referred to as a cell 112A, 112B and 112C (hereinafter also collectively referred to as 5G cell 112).

The size of the 5G cell 112 of each 5G base station 111 is freely selected, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For this reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 includes a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality and the like, under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft and the like with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In this way, the gateway 133 connects the non-terrestrial network (NTN), which is including communication satellites 131 as a non-terrestrial base station or a satellite base station, and the terrestrial network TN, which includes terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In this way, appropriate coordination is made between different wireless communication systems such as 5G wireless communication system 11, 4G wireless communication system 12, satellite communication system 13 and the like through the gateway 133.

Satellite communication by communication satellites 131 is mainly used for covering areas with no or few terrestrial base stations such as 5G base stations 111, 4G base stations 121, and the like. In the example shown in the figure, a communication device 2D that is outside the communication cells of all the terrestrial base stations communicates with the communication satellite 131. On the other hand, communication devices 2A, 2B, and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D and the like. The communication satellite 131 uses beamforming to direct the communication radio wave to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft or a drone flying in stratosphere or other lower (e.g., about 20 km above the ground) atmosphere may be used as a non-terrestrial base station in addition to or instead of the communication satellite 131.

Figure 2 is a functional block diagram of a communication control apparatus 3 according to the present embodiment. The communication control apparatus 3 includes a relay station controller 31, a relay radio wave transmitter 32, a network-side relay quality provider 33, and a relay quality provider 34. Some of these functional blocks can be omitted as long as the communication control apparatus 3 realizes at least some of the operations and/or effects described below. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in the present embodiment, some or all of functional blocks of the communication control apparatus 3 may be realized in a centralized or distributed manner by computer and/or processor provided in the communication device 2 (UE), the relay station (the NCR), the base station 111, 121, 131 configuring the RAN, the gateway 133, and the core network.

The main control target of the communication control apparatus 3 according to the present embodiment is at least one of the radio access network (RAN), the relay station (the NCR), and the communication device (UE). It should be noted that, in the following, the gNB (the 5G base station 111) is illustrated as a representative configuration of the RAN. The following description for the gNB applies equally to any other base station, such as the 4G base station 121 (eNB) or the communication satellite 131.

The relay station (the NCR) is a repeater that relays downlink communication and uplink communication between the gNB (the radio access network) and the UE under the control of the network (the RAN and/or the core network). The relay station controller 31 in the network controls the NCR that relays communication between the gNB and the UE. The NCR decodes control information from the relay station controller 31, and performs processing such as communication timing control on a symbol-by-symbol basis, communication beam control such as beamforming, and on/off control of communication resources.

The downlink communication is a communication relayed by the NCR with the gNB as the transmitter and the UE as the receiver. The uplink communication is a communication relayed by the NCR with the UE as the transmitter and the gNB as the receiver. For example, the downlink communication and the uplink communication are performed using the Time Division Duplex (TDD) method. In the TDD mobile communication, the transmission timing and the reception timing and/or the downlink communication timing and the uplink communication timing are divided in time, in the gNB, the NCR, and the UE performing communication (transmission and reception) respectively.

In the downlink communication, the gNB as the transmitter transmits one or more communication units (communication data) to the NCR and/or the UE at the prescribed downlink transmission timing (schematically shown by the dotted arrow from the gNB to the NCR in Figure 2). The examples of the communication unit include the frame, the subframe, the slot, the symbol, and the like. In the following examples, the frame is mainly used as the communication unit.

The NCR as a relay station receives one or more downlink frames transmitted by the gNB. The NCR processes the downlink frames received from the gNB based on the control information from the gNB (the relay station controller 31). The relay radio wave transmitter 32 in the NCR transmits the processed downlink frame to the UE by transmitting the downlink (DL) relay radio wave. The UE as the receiver in the downlink communication, receives one or more downlink frames (the downlink relay radio waves) transmitted by the NCR.

In the uplink communication, the UE as the transmitter transmits one or more uplink frames to the NCR and/or the gNB at the prescribed uplink transmission timing (schematically shown by the dotted arrow from the UE to the NCR in Figure 2), typically in response to the downlink frame received from the NCR.

The NCR as a relay station receives one or more uplink frames transmitted by the UE. The NCR processes the uplink frames received from the UE based on the control information from the gNB (the relay station controller 31). The relay radio wave transmitter 32 in the NCR transmits the processed uplink frame to the gNB by transmitting the uplink (UL) relay radio wave. The gNB as the receiver in the uplink communication, receives one or more uplink frames (the uplink relay radio waves) transmitted by the NCR.

The relay radio wave setter 311 in the relay station controller 31 (the gNB), provides the NCR with setting information concerning the relay radio wave (the downlink relay radio wave and/or the uplink relay radio wave) to be transmitted by the NCR. The relay radio wave transmitter 32 in the NCR, transmits the relay radio wave (the downlink relay radio wave and/or the uplink relay radio wave) based on the setting information provided from the relay radio wave setter 311. The relay radio wave transmitter 32 (the NCR) is equipped with an amplifier 321 that amplifies the relay radio wave to the desired transmission power or strength, based on the setting information provided from the relay radio wave setter 311. It should be noted that, although not shown in the figure, the relay radio wave transmitter 32 (the NCR) is equipped with various components such as an antenna and a radio-frequency circuit necessary for transmitting the relay radio wave of any type, based on the setting information provided from the relay radio wave setter 311.

The relay radio wave setter 311 provides the relay radio wave transmitter 32 (the NCR) with the setting information concerning at least one of the following for the relay radio wave (the downlink relay radio wave and/or the uplink relay radio wave) to be transmitted by the NCR: coverage, allocation to a specific communication device, transmission power, beam type, beam width, number of beams, beam direction, frequency, frequency bandwidth, subcarrier spacing, symbol length, slot length, transmission time length, and transmission pattern.

The setting information concerning the coverage, sets the coverage of the relay radio wave to be transmitted by the NCR. Figure 3 schematically shows an example of setting the coverage of the downlink relay radio wave in the communication-device-side relay link between the NCR and the UE (hereinafter also referred to as the access link). It should be noted that the network-side relay link between the NCR and the gNB is hereinafter also referred to as the backhaul link. In the present example, the NCR (the relay radio wave transmitter 32) transmits two types of downlink relay radio waves into the coverages set for each, based on the setting information of the coverage by the gNB (the relay radio wave setter 311).

The first downlink relay radio wave, shown as a "wide beam" in Figure 3, is a beam that covers a wide area where typically many UEs are located. Such a wide-range beam can be used mainly to notify UEs within such wide area of the presence of the NCR. In such a way, the wide-range beam defines the substantial coverage of the NCR.

The second downlink relay radio waves, shown as "narrow beams" in Figure 3, are beams that cover narrow areas where typically only a few (e.g., one) UEs are located. Such narrow-range beams can be used mainly for communications with specific UEs within such narrow areas. In other words, the narrow-range beams are dedicated to specific UEs.

In a typical case, the UE first recognizes the presence of the NCR through the wide-range beam (strictly speaking, the UE cannot recognize the presence of the NCR, but recognizes the NCR as the gNB). Then, after the initial connection is established between the UE and the NCR (and the gNB), a dedicated narrow-range beam for the specific UE is set by the gNB (the relay radio wave setter 311) in accordance with the communication needs such as communication volume.

The setting information concerning the allocation to a specific communication device, allocates at least some beams of the relay radio wave to be transmitted by the NCR to a specific communication device. Such setting information may set the allocation to a specific communication device together with the coverage, as the narrow-range beam shown in Figure 3.

The setting information concerning the transmission power, sets the transmission power or strength of each beam or group of beams of the relay radio wave to be transmitted by the NCR. The relay radio wave setter 311 may provide the NCR with the setting information concerning the transmission power, as setting information concerning the amplifier gain of the amplifier 321 in the NCR.

The setting information concerning the beam type, sets the type of each beam or group of beams of the relay radio wave to be transmitted by the NCR. Examples of the beam type include those for defining the maximum coverage of the NCR, such as the wide-range beam shown in Figure 3, and those for allocating to a specific UE, such as the narrow-range beam shown in Figure 3.

The setting information concerning the beam width, sets the width of each beam or group of beams of the relay radio wave to be transmitted by the NCR. For example, the width of the wide-range beam shown in Figure 3 is set to be wide, and the width of the narrow-range beam shown in Figure 3 is set to be narrow.

The setting information concerning the number of beams, sets the number of beams in each beam group of the relay radio wave to be transmitted by the NCR. For example, the number of beams in the wide-range beam group shown in Figure 3 is set to be large, and the number of beams in the narrow-range beam group shown in Figure 3 is set to be small (e.g., one).

The setting information concerning the beam direction, sets the direction of each beam or group of beams of the relay radio wave to be transmitted by the NCR. Such setting information may set the direction of the boresight of one or more antennas (not shown) in the NCR.

The setting information concerning the frequency or the frequency bandwidth, sets the frequency or the frequency bandwidth of each beam or group of beams of the relay radio wave to be transmitted by the NCR. The setting information concerning the subcarrier spacing, the symbol length, or the slot length, sets the subcarrier spacing, the symbol length, or the slot length of each beam or group of beams of the relay radio wave to be transmitted by the NCR. As is well known, in 5G, the symbol length (the duration of one symbol) and the slot length (the duration of one slot (including 14 OFDM symbols)) are variable, in accordance with the subcarrier spacing.

The setting information concerning the transmission time length, sets the time length of the relay radio wave that can be transmitted by the NCR per transmission, or the unit time length of the relay radio wave that can be transmitted by the NCR. Here, the transmission time length may be set based on the standard time length defined in 5G and the like such as the symbol length, the slot length, the subframe length, or the frame length, or may be a freely set time length. The setting information concerning the transmission pattern, sets the pattern of the timings at which the NCR can transmit the relay radio waves. Here, the transmission pattern is set based on at least one of the symbol, the slot, the subframe, and the frame. For example, the transmission pattern set based on the symbol specifies the symbols that the NCR can use to transmit the relay radio waves, among the 14 symbols in each slot, by means of a bit map of "0" (not available) and "1" (available) and the like. In such a case, the NCR transmits the relay radio waves using only the symbols set to "1" in the transmission pattern.

The above various setting information (coverage, allocation to a specific communication device, transmission power, beam type, beam width, number of beams, beam direction, frequency, frequency bandwidth, subcarrier spacing, symbol length, slot length, transmission time length, transmission pattern and the like) may be set in advance in appropriate combination for each typical case that can be assumed. The relay radio wave setter 311 can select a set of setting information suitable for the current state or condition of the relay link, recognized based on the quality information and the like of the relay link acquired from the network-side relay quality provider 33 and/or the relay quality provider 34 described below, and provide it to the relay radio wave transmitter 32.

As described above, the gNB (the relay radio wave setter 311) can indirectly control the number of UEs that can connect or communicate with the NCR and the like, by directly setting the relay radio wave to be transmitted by the NCR (the relay radio wave transmitter 32). For example, by intentionally limiting the coverage, the transmission power, the beam width, the number of beams, the frequency bandwidth and the like of the relay radio wave, an upper limit can be set on the number of UEs that can connect or communicate with the NCR.

The provision of the setting information from the relay radio wave setter 311 to the relay radio wave transmitter 32 as described above, may be performed periodically, may be performed when the NCR is initially connected to the gNB, or may be performed when there is a significant change in the quality information and the like of the relay link acquired from the network-side relay quality provider 33 and/or the relay quality provider 34 described below.

The network-side relay quality provider 33 in the NCR provides the gNB with information concerning the quality of the backhaul link (the network-side relay link) between the NCR and the gNB. Specifically, in the similar way to a general UE, the NCR functions as a communication device that measures the communication quality with the gNB (also referred to as MT (Mobile Termination) or NCR-MT. Besides, the function in the NCR of relaying or forwarding the communication between the gNB and the UE is also referred to as Fwd or NCR-Fwd). Such NCR provides the gNB (the relay radio wave setter 311) with the measurement result of the communication quality of the backhaul link through the backhaul link (the link between the NCR-Fwd and the gNB) and/or the control link (the link between the NCR-MT and the gNB) used for the communication of the control information by the relay station controller 31.

The relay quality provider 34 in the UE provides the gNB with information concerning the quality of the relay link via the NCR between the UE and the gNB (the combined link of the access link on the UE side and the backhaul link on the gNB side). Specifically, the UE measures the communication quality with the gNB (via the NCR) and provides the result to the gNB (the relay radio wave setter 311).

The relay radio wave setter 311 can recognize the communication quality of the backhaul link (the network-side relay link) through the network-side relay quality provider 33. Besides, the relay radio wave setter 311 can recognize the communication quality of the entire relay link incorporating the access link and the backhaul link through the relay quality provider 34. Therefore, the relay radio wave setter 311 can also recognize the communication quality of the access link (the communication-device-side relay link), which corresponds to the difference between the communication quality of the entire relay link and the communication quality of the backhaul link.

Thus, the relay radio wave setter 311 can provide the NCR with appropriate setting information concerning the relay radio wave to be transmitted by the NCR to the UE and/or the gNB, while recognizing the communication quality of the backhaul link, the access link, and the entire relay link.

For the downlink communication, the relay radio wave setter 311 can provide the relay radio wave transmitter 32 with appropriate setting information concerning the downlink relay radio wave to be transmitted by the NCR to the UE over the access link, while recognizing the communication quality of at least one of the backhaul link, the access link, and the entire relay link. For the uplink communication, the relay radio wave setter 311 can provide the relay radio wave transmitter 32 with appropriate setting information concerning the uplink relay radio wave to be transmitted by the NCR to the gNB over the backhaul link, while recognizing the communication quality of at least one of the backhaul link, the access link, and the entire relay link.

According to the present embodiment described above, the relay quality of the NCR can be improved, with the setting information concerning the relay radio wave (the downlink relay radio wave and the uplink relay radio wave) to be transmitted by the NCR (the relay radio wave transmitter 32) being provided from the gNB (the relay radio wave setter 311).

The present disclosure has been described above based on embodiments. It is obvious to those skilled in the art that various variations are possible in the combination of each component and/or each process in the exemplary embodiments, and that such variations are also encompassed within the scope of the present disclosure.

It should be noted that the structures, the operations, and the functions of each apparatus and/or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.
1. A communication control apparatus comprising at least one processor that performs:
   by a relay station controller in a radio access network, controlling a relay station that relays communication between the radio access network and a communication device;
   by a relay radio wave setter in the relay station controller, providing the relay station with setting information concerning the relay radio wave to be transmitted by the relay station; and
   by a relay radio wave transmitter in the relay station, transmitting the relay radio wave based on the setting information.
2. The communication control apparatus according to item 1, wherein
   the at least one processor performs, by a network-side relay quality provider in the relay station, providing the radio access network with information concerning the quality of a network-side relay link between the relay station and the radio access network,
   the relay radio wave setter provides the relay station with the setting information concerning the downlink relay radio wave to be transmitted by the relay station to the communication device, in accordance with the information concerning the quality of the network-side relay link.
**3.** The communication control apparatus according to item **2,** wherein the relay radio wave setter provides the relay station with the setting information concerning the uplink relay radio wave to be transmitted by the relay station to the radio access network, in accordance with the information concerning the quality of the network-side relay link.
4. The communication control apparatus according to item 2 or **3,** wherein
   the at least one processor performs, by a relay quality provider in the communication device, providing the radio access network with information concerning the quality of a relay link via the relay station between the communication device and the radio access network,
   the relay radio wave setter provides the relay station with the setting information concerning the downlink relay radio wave to be transmitted by the relay station to the communication device, in accordance with the information concerning the quality of a communication-device-side relay link between the relay station and the communication device, which corresponds to the difference between the information concerning the quality of the relay link via the relay station and the information concerning the quality of the network-side relay link.
5. The communication control apparatus according to any of items 1 to 4, wherein the relay radio wave setter provides the relay station with the setting information concerning at least one of the following for the relay radio wave to be transmitted by the relay station: coverage, allocation to a specific communication device, transmission power, beam type, beam width, number of beams, beam direction, frequency, frequency bandwidth, subcarrier spacing, symbol length, slot length, transmission time length, and transmission pattern.
6. The communication control apparatus according to item 5, wherein the relay radio wave setter provides the relay station with the setting information concerning the transmission power as the setting information concerning amplifier gain in the relay station.
7. A communication control method performing:
   by a radio access network, controlling a relay station that relays communication between the radio access network and a communication device;
   by the radio access network, providing the relay station with setting information concerning the relay radio wave to be transmitted by the relay station; and
   by the relay station, transmitting the relay radio wave based on the setting information.
8. A computer-readable medium storing a communication control program that causes a computer to perform:
   by a radio access network, controlling a relay station that relays communication between the radio access network and a communication device;
   by the radio access network, providing the relay station with setting information concerning the relay radio wave to be transmitted by the relay station; and
   by the relay station, transmitting the relay radio wave based on the setting information.

The application claims priority of Japanese patent application 2022-177462, filed on November 4, 2022, which is hereby incorporated by reference in its entirety.

The present disclosure relates to setting relay radio wave in control of relay station by network.
1 wireless communication system, 2 communication device, 3 communication control apparatus, 11 5G wireless communication system, 12 4G wireless communication system, 13 satellite communication system, 31 relay station controller, 32 relay radio wave transmitter, 33 network-side relay quality provider, 34 relay quality provider, 111 5G base station, 112 5G cell, 121 4G base station, 122 4G cell, 131 communication satellite, 132 satellite communication cell, 133 gateway, 311 relay radio wave setter, 321 amplifier.

## Claims

1. A communication control apparatus comprising at least one processor that performs:
by a relay station controller in a radio access network, controlling a relay station that relays communication between the radio access network and a communication device;
by a relay radio wave setter in the relay station controller, providing the relay station with setting information concerning the relay radio wave to be transmitted by the relay station; and
by a relay radio wave transmitter in the relay station, transmitting the relay radio wave based on the setting information.

2. The communication control apparatus according to claim 1, wherein
the at least one processor performs, by a network-side relay quality provider in the relay station, providing the radio access network with information concerning the quality of a network-side relay link between the relay station and the radio access network,
the relay radio wave setter provides the relay station with the setting information concerning the downlink relay radio wave to be transmitted by the relay station to the communication device, in accordance with the information concerning the quality of the network-side relay link.

3. The communication control apparatus according to claim **2,** wherein the relay radio wave setter provides the relay station with the setting information concerning the uplink relay radio wave to be transmitted by the relay station to the radio access network, in accordance with the information concerning the quality of the network-side relay link.

4. The communication control apparatus according to claim **2,** wherein
the at least one processor performs, by a relay quality provider in the communication device, providing the radio access network with information concerning the quality of a relay link via the relay station between the communication device and the radio access network,
the relay radio wave setter provides the relay station with the setting information concerning the downlink relay radio wave to be transmitted by the relay station to the communication device, in accordance with the information concerning the quality of a communication-device-side relay link between the relay station and the communication device, which corresponds to the difference between the information concerning the quality of the relay link via the relay station and the information concerning the quality of the network-side relay link.

5. The communication control apparatus according to claim **1,** wherein the relay radio wave setter provides the relay station with the setting information concerning at least one of the following for the relay radio wave to be transmitted by the relay station: coverage, allocation to a specific communication device, transmission power, beam type, beam width, number of beams, beam direction, frequency, frequency bandwidth, subcarrier spacing, symbol length, slot length, transmission time length, and transmission pattern.

6. The communication control apparatus according to claim 5, wherein the relay radio wave setter provides the relay station with the setting information concerning the transmission power as the setting information concerning amplifier gain in the relay station.

7. A communication control method performing:
by a radio access network, controlling a relay station that relays communication between the radio access network and a communication device;
by the radio access network, providing the relay station with setting information concerning the relay radio wave to be transmitted by the relay station; and
by the relay station, transmitting the relay radio wave based on the setting information.

8. A computer-readable medium storing a communication control program that causes a computer to perform:
by a radio access network, controlling a relay station that relays communication between the radio access network and a communication device;
by the radio access network, providing the relay station with setting information concerning the relay radio wave to be transmitted by the relay station; and
by the relay station, transmitting the relay radio wave based on the setting information.
